(19) **Europäisches Patentamt**
**European Patent Office**
**Office européen des brevets**

(11) **EP 4 750 111 A1**

(12) **EUROPEAN PATENT APPLICATION**

(43) Date of publication:
**27.05.2026 Bulletin 2026/22**

(21) Application number: **24214768.4**

(22) Date of filing: **22.11.2024**

(51) International Patent Classification (IPC):
**H04W 12/041** (2021.01)  **H04L 9/08** (2006.01)

(52) Cooperative Patent Classification (CPC):
**H04W 12/041; H04L 9/0875;** H04L 2209/80

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **IHP GmbH - Innovations for High Performance Microelectronics / Leibniz-Institut für innovative Mikroelektronik 15236 Frankfurt (Oder) (DE)**

(72) Inventors:
• **Manjappa, Navaneetha C.**
  **15236 Frankfurt (Oder) (DE)**
• **Wimmer, Lara**
  **15236 Frankfurt (Oder) (DE)**
• **Sark, Vladica**
  **15236 Frankfurt (Oder) (DE)**
• **Grass, Eckhard**
  **15236 Frankfurt (Oder) (DE)**

(74) Representative: **Eisenführ Speiser Patentanwälte Rechtsanwälte PartGmbB Stralauer Platz 34 10243 Berlin (DE)**

(54) **PHYSICAL LAYER SECURITY KEY GENERATION FOR WIRELESS COMMUNICATION**

(57)     For generation of a physical-layer secret key for use in wireless communication, a first transceiver and a second transceiver, both with beamforming capability, in a sequence of repetitions covering a plurality of beam pairs from a beamforming codebook defining a set of beam pairs, select a transmit beam angle and a receive beam angle in respective random order unknown to the respective other transceiver, for probe signal exchange and determining respective versions of channel state information. The channel state information versions are used to determine, after quantization and reconciliation, sub-keys associated with the respective beam pairs, which are combined to obtain a composite physical-layer secret key.

Fig. 3

EP 4 750 111 A1

**Description**

FIELD OF THE INVENTION

The present invention is in the field of wireless communication. In particular, the invention concerns the generation of a physical-layer secret key for wireless communication, herein PLSK.

BACKGROUND

Progress in wireless communication systems promises advanced services, reliability, latency and data rate improvement. This results in new security challenges that conventional cryptography solutions might not completely address. Commonly used symmetric and asymmetric methods require the exchange and management of keys. This requires a resource and complexity overhead in current advanced wireless systems. In addition, these security methods completely depend upon the mathematical complexity of the keys. In particular, they are based on the length of a secret key and how long it takes to obtain the key, which is assumed to be several years.

However, an intruder having access to advanced systems might be able to reveal a secret key faster. Such attacks can be more and more easily performed in future with the development of quantum computers which are assumed to crack even highly secure cryptographic secret keys within a few seconds. Hence there is a need for the development of a different key generation method which can provide high security with less complexity and infrastructure overhead.

In recent years, the development of security approaches at the physical layer of wireless networks has gained more interest. Such studies show that physical layer security methods can potentially be a lightweight, low-complexity, efficient way of securing future wireless networks. Physical layer secret key generation (PLSKG) methods utilize reciprocal wireless channel properties such as received signal strength indicator (RSSI), and channel state information (CSI) which is available at the physical layer to secure the communication. PLSKG an approach where the reciprocity, randomness and spatial variability of the channel are used to generate secret keys:

- Reciprocity means that the channel's properties are similar when measured from either transceiver. This reciprocal nature allows both communicating transceivers to independently generate the same key by measuring the channel. The communicating transceivers thus both generate the same secret key without exchanging any keys in the public domain.
- Randomness of wireless channels exists due to factors like multipath propagation, interference, and noise. This randomness ensures that the channel characteristics are unpredictable to an eavesdropper.
- Spatial variability means that the physical properties of the channel vary significantly in response to even small changes in location. This means that an eavesdropper, who is not at the exact location at least one of the transceivers, will observe a different channel, preventing them from generating the same key.

A pair of transceivers using PLSKG in their mutual exchange is commonly referred to as "Alice" and "Bob", whereas an eavesdropper is referred to as "Eve". Eavesdropping refers to intercepting and listening to communication between two parties without their knowledge and permission. Known PLSKG methods include exchanging an OFDM symbol of ones, i.e., a maximum power spectrum between Alice and Bob. Due to channel reciprocity, Alice and Bob can obtain the same encryption key from the Channel Impulse Response (CIR). The entropy of the key arises from the complexity of the CIR. When Eve receives the CIRs from Alice and Bob, she receives two different CIRs that are not equal to the CIR between Alice and Bob.

However, there are still ways for Eve to determine the secret key, assuming that Eve has good hardware and access to sophisticated tools to detect the signals exchanged between

Alice and Bob and perform subsequent calculations. In particular, in mmWave systems, signal coverage is possible through line-of-sight (LOS) paths and through the first-order reflections from ambient reflectors along non-line-of-sight (NLOS) paths. Eve can receive the transmissions through these reflections although she is not in the LOS region. Another possibility is that legitimate users must perform exhaustive beam search procedures to establish highly directional mmWave links. Due to this, Eve can predict the LOS region and move to this region.

Once Eve obtains the signals from legitimate users in the LOS region or signals with sufficient first-order reflections, the position of the users can be estimated. In particular, the presence of a sufficient number of first order reflection peaks in the received CIRs enables Eve to compute the positions of Bob and Alice. Once Eve knows the position of Alice and Bob and has a carefully mapped reconstruction of the communication environment, she can compute the CIR between Alice and Bob using a digital twin and raytracing techniques. Complete information about the communication environment might even not always be required in order to crack the system. Also, a communication environment formed by a closed room might not have any dynamic elements, thus making a reconstruction of the secret key easier for Eve. The only thing Eve does not know to generate the encryption key is the number of mismatches between Alice and Bob. Since each mismatch reduces the entropy of the final key, Alice and Bob will typically avoid the occurrence of mismatches. Therefore, assuming no mismatches is not unreasonable, and would result in Eve having complete information to generate the secret key for decrypting the PLSKG-encrypted communication between Bob and Alice. Thus, with the knowledge of the environment, position and CSI, the physical layer security methods can be attacked and keys can be extracted.

The present invention proposes methods and devices to further improve PLSKG in view of the above issues.

SUMMARY OF THE INVENTION

In particular, according to a first aspect, the present invention proposes a method for generation of physical-layer secret key, herein PLSK, in accordance with claim 1.

The method for generation of a PLSK for use in wireless communication between a first transceiver and a second transceiver, both with beamforming capability, comprises, in a sequence of repetitions covering a plurality of beam pairs from a beamforming codebook defining a set of beam pairs:

- A. the first transceiver selecting a transmit beam angle from the beam codebook, and sending to the second transceiver one or more predetermined probe signals using the selected transmit beam angle, wherein selecting the transmit beam angle is performed in a first random order over the sequence of repetitions, the first random order being unknown to the second transceiver;

- B. the second transceiver selecting a receive beam angle from the beamforming codebook, and receiving, using the selected receive beam angle, the one or more probe signals sent by the first transceiver, wherein selecting the receive beam angle is performed in a second random order over the sequence of repetitions, the second random order being unknown to the first transceiver;

- C. the second transceiver using the received one or more probe signals to determine a first version of channel state information associated with the beam pair formed by the selected transmit beam angle and the selected receive beam angle;

- D. the second transceiver, using the selected receive beam angle as a response transmit beam angle, sending to the first transceiver the one or more predetermined probe signals;

- E. the first transceiver, using the selected transmit beam angle as a response receive beam angle, receiving the one or more probe signals sent by the second transceiver;

- F. the first transceiver using the received one or more probe signals to determine a second version of channel state information associated with the beam pair.

The method further comprises:

- G: performing, for at least a fraction of the beam pairs, a quantization and reconciliation process stage using the respective first-transceiver and second-transceiver version of channel state information determined for a respective beam pair to determine a respective sub-key associated with the respective beam pair;
- H: combining the determined sub-keys to obtain a composite key.

According to the present invention, the first and second transceiver select transmit and receive beam angles randomly such that they do not know each other's selected beam directions. Then, secret beam keys (SBK) are generated from the measured channel state information and combined together to form a secret composite key. In this way, an eavesdropper has no information about which beam directions are selected and cannot obtain information about the secret key.

After measuring the channel at the first and second transceivers, due to noise and measurement errors, the determined channel state information versions for a given beam pair, typically quantized in the form of bit sequences, might not be identical, i.e., include mismatches. Reconciliation techniques, such as error correction codes, are used to ensure that both transceivers end up with the same common channel state information version.

The invention is advantageous for any wireless communication system where both transceivers in their role as transmitter (Tx) and receiver (Rx) have a beamforming capability. For example, the method may be advantageously applied by mobile devices using 3G, 4G, 4G-LTE, LTE-A, 5G and above cellular mobile communication technologies, as well as in Wi-Fi, Wi-MAX, Ultra-Wideband (UWB) and joint/integrated communication and sensing (JCAS/ICAS) systems.

The beamforming capability can be analog, i.e., adjusting the phase and amplitude of the signal at each antenna element using analog components, or digital, wherein the phase and amplitude adjustments are performed digitally. A hybrid beamforming method, combining analog and digital beamforming, may be used as well. The present invention primarily considers the use of phased array antennae, in particular in the millimeter-wave frequency range, which is typically defined between 30 GHz and 300 GHz. However, the invention is not limited in this regard. The antennae used can be of any type that allows beam-steering in transmission and reception. For example, even in single antenna systems beam-steering can be achieved mechanically.

The channel state information determined in the course of performing the method can be any suitable measure indicative of reciprocal channel characteristics between the first and the second transceiver. In particular, the channel state information may comprise one or more of the following:

- a Channel State Information, CSI, determined using as the one or more probe signals a CSI reference signal in accordance with a 3GPP, Release 15 or higher, standard;

- information indicative of a Channel Impulse Response, CIR, determined from the probe signal;

- information indicative of the phase of the received probe signal in relation to the transmitted signal;

- information indicative of how long it takes for the probe signal to travel between the two transceivers, in particular a time-of-arrival, ToA, or a time-difference-of-arrival, TDOA, information

- information indicative of a change in frequency of the probe signal due to the relative motion between the transceivers, Doppler shift information; and

- information indicative of an angle of arrival, AoA, of the probe signal.

Since both transceivers independently generate their own first-transceiver and second-transceiver versions of the channel state information, their versions typically differ from each other slightly due to noise or quantization errors. For that reason, the method of the invention involves a reconciliation process, using the respective first and second version of channel state information determined for a respective beam pair to determine a respective common channel state information version associated with the respective beam pair. However, it is noted with regard to this quantization and reconciliation process stage, that it is not necessary for one of the first and second transceivers to have both initial versions, i.e., its own version and the exact version from the other transceiver in order to perform reconciliation. The reconciliation process may be performed without either transceiver fully knowing the quantized channel state information generated by the respective other transceiver. Instead, the reconciliation process may use partial information to resolve discrepancies between the two transceivers' keys. Such partial information may be provided by transmitting parity bits or syndromes derived from error-correcting codes, rather than the actual quantized channel state information. This ensures that the sub-key cannot be derived by an eavesdropper while still allowing for reconciliation of mismatched bits.

The method may further comprise selecting only those beam pairs for performing the quantization and subsequent reconciliation process stage, for which the determined channel state information meets or exceeds a predetermined channel quality criterion. As an example, a recorded CSI with mismatches beyond a certain threshold level, for example more than 54% mismatches, may lead to a rejection of beam pairs with a correspondingly low CSI. The selection can be done before the first step of key generation, which is the quantization. However, a dedicated selection step may not be necessary in any application case. If the channel quality is poor, the signal is not received. Due to the reciprocity inherent in the communication channel, both transceivers will not receive the signals from the corresponding beam pairs. Hence no channel state information (CSI) is recorded and no key is generated for corresponding beam pair.

Generating the sub-key may comprise using the common channel state information as an input to a hashing function, and using an output of the hashing function as the sub-key. The real and imaginary parts of the CSI may be quantized to generate sequences of binary bits in the quantization stage. An adaptive threshold-based quantization process may be employed in this context, where bits within dynamically adjusted maximum and minimum quantization thresholds are set to 1. Using an adaptive process allows the quantization process to react to changing conditions in the signal, such as its amplitude, frequency content, or variance. For instance, when the signal is in a high-dynamic range region, more quantization levels may be assigned, and fewer levels might be used in low-dynamic regions.

Preferably, to further increase the secrecy level, the probe signals are individual for each beam pair.

The first and second transceivers may use an identical frequency for transmitting the probe signals associated with a respective beam pair.

Using only a real-value part of the channel-state information or only an imaginary-value part in the quantization is sufficient for performing secret beam key generation. However, preferably, the step of the first and second transceiver each determining its version of channel state information associated with the respective beam pair comprises determining a real-value part and an imaginary-value part of the channel state information. This allows combining the keys generated from the real and imaginary parts to form the SBKs. A set of SBKs generated from CSIs of selected beam directions may then be used to form a composite key by combining the sub-keys formed by the SBKs.

Combining determined sub-keys to obtain a composite key may comprise combining the sub-keys in an order corresponding to the random order of the selection of associated beam pairs in the sequence of repetitions. This random ordering of the sub-keys in the composite key further increases the secrecy level.

An advantageous application case of the invention is performing the method between a user equipment as the first transceiver and a base station of a wireless communication network as the second transceiver. However, in another equally advantageous application case, the communication is between two user equipment devices. Hence, UE-to-UE applications are also considered.

The method suitably further comprises the first and second transceiver employing OFDM to modulate and send the probe signals and/or the payload. While OFDM is widely used in current communication systems in order to achieve a high data rate and a high spectral efficiency, the method of the invention is not limited to a particular modulation scheme such as OFDM, but can also be used in systems which use other types of modulation schemes. Exemplary basic types of digital modulation schemes for communication, which may be used in combination with the present invention, are quadrature amplitude modulation (QAM), phase shift keying (PSK) and frequency shift keying (FSK).

A second aspect of the invention is a method for operating any of the first or second transceiver in the context of performing the method of the first aspect. In particular, the present invention proposes a method for operating a first transceiver in generating a physical-layer secret key, herein PLSK, for use in wireless communication between the first transceiver and a second transceiver, both with beamforming capability, in accordance with claim 11. The method comprises the following:

The first transceiver, in a sequence of repetitions covering a plurality of beam pairs from a beamforming codebook defining a set of beam pairs

- selects a transmit beam angle from the beam codebook, and sends to the second transceiver one or more predetermined probe signals using the selected transmit beam angle, wherein selecting the transmit beam angle is performed in a first random order over the sequence of repetitions, the first random order being unknown to the second transceiver;

- uses the selected transmit beam angle as a response receive beam angle, and receives one or more probe signals sent by the second transceiver; and

- uses the received one or more probe signals to determine a first-transceiver version of channel state information associated with the beam pair;

In performing the method, the first transceiver further

- performs, for at least a fraction of the beam pairs, a quantization and subsequent reconciliation process stage for a respective beam pair to determine a common channel state information version associated with the respective beam pair from the respective first-transceiver version and information on a respective second-transceiver version of channel state information determined by the second transceiver;

- uses the determined common channel state information version in determining a sub-key associated with the respective beam pair; and

- combines the determined sub-keys to obtain a composite key.

The method of the second aspect shares the advantages and modification options described for the method of the first aspect.

According to a third aspect, the present invention proposes a controller in accordance with claim 12. The controller is for controlling operation of a transceiver in performing a method for generation of a physical-layer secret key for use in wireless communication between the transceiver as a first transceiver, and a second transceiver, both with beamforming capability. The controller is configured to control operation of the transceiver in performing the method of the second aspect.

The controller for a transceiver participating in the physical layer key generation process according to the invention may be implemented as a single chip. Such a chip may integrate multiple functions, including the baseband processor, a digital signal processor (DSP), and security modules. This type of architecture allows a single chip to control the entire process of physical layer secure key generation. However, for some transceiver designs, especially for more complex systems like base stations, the controller may comprise different chips or chipsets that may perform separate tasks involved in the control operation. For example, a dedicated baseband chip may handle the control of the radio communication performed in the context of the method, while a separate security module handles the control of the key generation.

A fourth aspect of the invention is a transceiver for performing wireless communication, the transceiver having beamforming capability and being configured to perform the method of the second aspect. In one implementation, the transceiver may comprise the controller of claim of the third aspect of the invention. However, the present invention also comprises embodiments such as remote radio heads in which a transceiver lacks sophisticated onboard processing capabilities, but is fully or mostly controlled by a remote controller unit located elsewhere.

A fifth aspect of the invention is a communication system comprising a first transceiver and a second transceiver, both having beamforming capability, wherein the first transceiver and the second transceiver are configured to jointly perform the method of the first aspect, as defined in claim 1, for generation of a physical-layer secret key for use in wireless communication between the first transceiver and the second transceiver.

The invention will be described further with reference to the drawings. In the drawings:

Fig. 1 is a schematic illustration of a mm Wave communication system for explaining a potential physical layer security issue in the presence of an eavesdropper;

Fig. 2 is a flow diagram of an exemplary method for generation of a physical-layer secret key

Fig. 3 is an illustration providing additional detail of an exemplary process for composite key generation;

The present invention is applicable in any wireless communication system using beamforming on the physical layer of the communication between transceivers. The following description using the example of mm wave communication is not to be understood as intended to limit the scope of applicability of the invention.

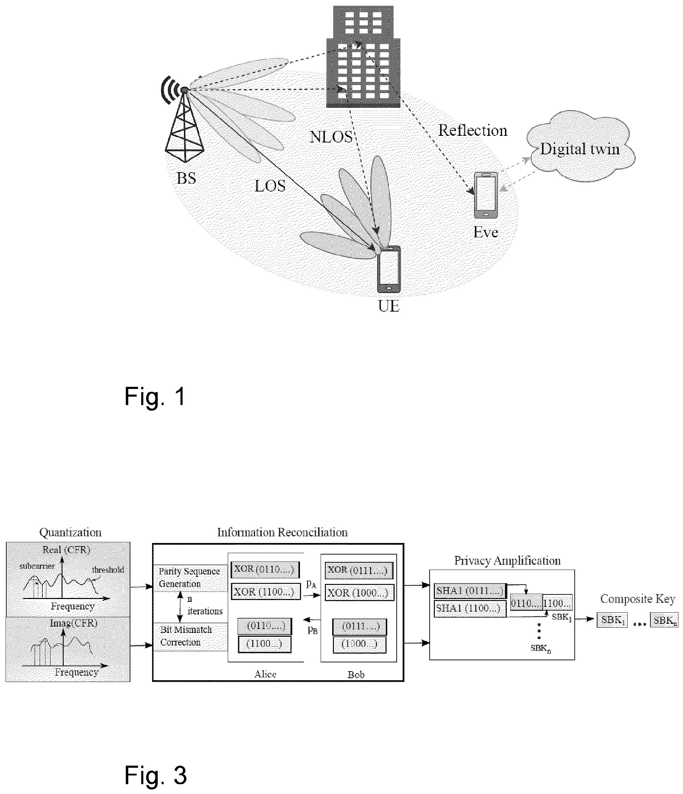

Fig. 1 is a schematic illustration of a mm wave communication system for explaining a potential physical layer security issue in the presence of an eavesdropper. In the exemplary scenario illustrated, two transceivers, which in this exemplary and non-limiting case are a user equipment UE and a base station BS, communicate within a cell of a terrestrial cellular mobile communication system via electromagnetic mm waves, using their phased-array antennas. In mm wave systems, signal coverage is possible through line-of-sight (LOS) paths and the first-order reflections from ambient reflectors along non-line-of-sight (NLOS) paths.

Beam alignment is critical in mm wave systems due to a highly directional nature of the signal. The illustration of Fig. 1 shows different signal lobes associated with the user equipment UE and the base station BS that represent individual transmit or receive beam directions that can be set by the respective transceiver. A sufficient match between transmit and receive beams is required to establish communication. Codebooks simplify the beam alignment process by reducing the complex space of possible beamforming configurations to a manageable set. The purpose of a codebook is to provide a catalogue of options for adjusting the beam's direction and strength to achieve optimal signal alignment between devices. Each code in the codebook represents a specific beam direction or steering angle and can be expressed by a steering vector. In a phased array antenna, each antenna element of the array needs a specific phase shift to align the transmitted or received signal in the desired direction. The steering vector mathematically defines these shifts based on the geometry of the array and the angle of the intended direction. A steering vector thus is a mathematical representation of phase shifts required across an antenna array to direct ("steer") a beam in a particular direction. In practice, thus, the steering vectors are building blocks for creating the beam patterns included in the codebook.

During a communication session between the two transceivers UE and BS, the transceivers test the codebook entries to find and select the suitable beams for transmission and reception. In this process, the transceivers must perform a beam search procedure, known in the art for instance as exhaustive beam search or hierarchical beam search, to establish the highly directional mmWave link.

To prepare an eavesdropping attack on the two transceivers UE and BS, an eavesdropper can predict the LOS region and move eavesdropping equipment Eve to this region. Once the eavesdropping equipment Eve obtains signals from target transceivers in the LOS region, or signals with sufficient first-order reflections, the position of the transceivers UE and BS can be estimated. Using suitable eavesdropping equipment Eve, an eavesdropper may thus determine a carefully mapped reconstruction of the communication environment. Based on the established reconstruction of the communication environment, channel state information can be extracted using a digital twin. The digital twin represents a virtual replica created from the real-time measurements of the physical communication environment. This digital twin mirrors the actual environment, including, inter alia, its signal propagation and interference properties. By reflecting the complex and possibly also changing conditions of the mobile environment, the digital twin allows an eavesdropper performing detailed analysis and simulation of the communication between the attacked transceivers UE and BS. Thus, with the knowledge of the environment, position and channel state information, security methods applied by the transceivers that are based on physical layer properties of the communication environment can be attacked and keys used by the transceivers UE and BS for their exchange can be extracted.

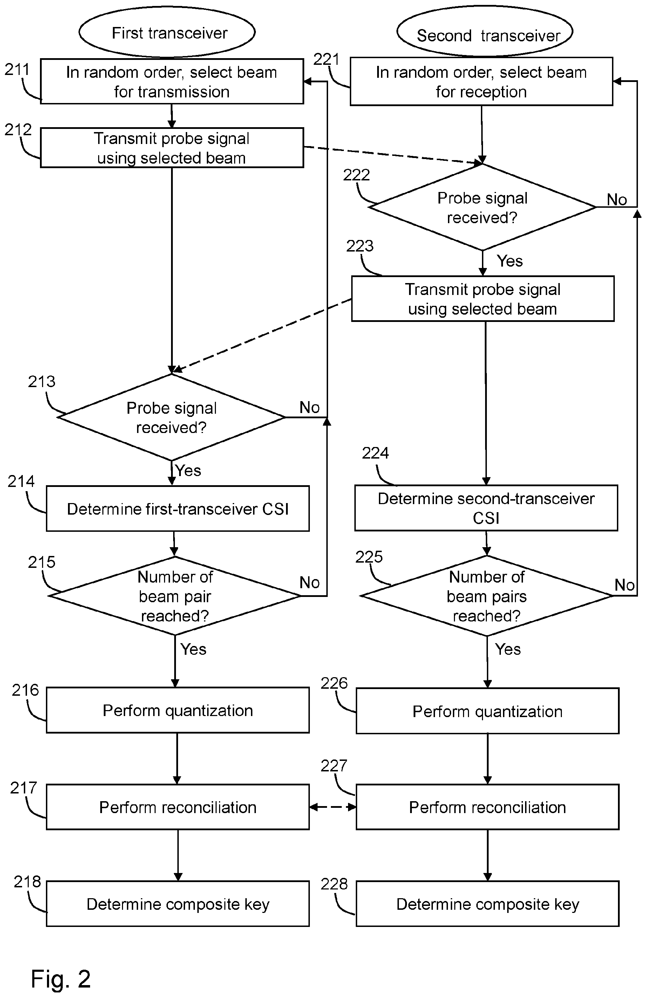

Fig. 2 is a flow diagram of an exemplary method for generation of a physical-layer secret key. of a physical-layer secret key, herein PLSK, for use in wireless communication between a first transceiver and a second transceiver, both with beamforming capability.

The method initially comprises, in a first process stage, repetitions of a sequence of steps to collect channel state information for a predetermined number of beam pairs from a beamforming codebook. An individual sequence performed during the first process stage encompasses steps 211 to 215 on the side of the first transceiver, and steps 221 to 225 on the side of the second transceiver.

A single instance of this first process stage is described in the following.

In step 211, the first transceiver selects a transmit beam angle from the beam codebook. Selecting the transmit beam angle is performed in a first random order over the sequence of repetitions. The first random order is unknown to the second transceiver. The random order can be determined using a concept of generating a random number, which are per se known, but specified here for the given beam codebook. A simple implementation uses a simple pseudo-random number generator and random selection of all possible beam pairs. However, a limitation of the selectable beam pairs may be imposed, dynamically or by means of a predetermined protocol. The generation of the random number may also be restricted in that each beam pair may only be selected once in this stage.

The method can be further optimized by utilizing noise from the hardware impairments such as the in phase and quadrature phase (IQ) imbalances, and power amplifier non-linearities, to generate a non-deterministic seed and true random number generator. In addition, instead of considering beam pairs individually, a group of beams from each user can be selected. It should be noted that there is a sub-optimal trade-off between the selection of only a subset of all possible beam directions and the key entropy.

In step 212, the first transceiver sends one or more predetermined probe signals to the second transceiver, using the selected transmit beam angle.

In parallel to step 211 performed at the first transceiver, the second transceiver, in step 221, selects a receive beam angle from the beamforming codebook. Selecting the receive beam angle is performed in a second random order over the sequence of repetitions, and the second random order is unknown to the first transceiver. For the second transceiver, corresponding considerations for the implementation of the random selection apply as explained for the first transceiver.

In step 222 the second transceiver determines whether or not the beam pair randomly formed by the first and second transceivers in their respective random beam selection steps 211 and 221 leads to the reception of the probe signals sent by the first transmitter in step 212. If that is not the case, the method branches back to step 221 for selecting and testing the next beam pair. If, however, the second transceiver determines in step 222 that the probe signal has been received, the second transceiver uses the currently selected beam angle to transmit its own probe signal back to the first transmitter, step 223. In other words, the second transceiver uses its current randomly selected receive beam angle as a response transmit beam angle for sending the one or more predetermined probe signals to the second first transceiver.

The first transmitter, in step 213, determines whether or not the probe signal transmitted by the second transceiver has been received. It is noted that there may be a predefined threshold of signal quality to determine whether or not a probe signal counts as received or not received. The threshold may be applied equally by both transceivers. However, in view of channel reciprocity, it is also possible that only the second transceiver makes this comparison of the received probe signal against the signal quality threshold.

At this time, in case the first and second transceiver both have successfully exchanged probe signals for the randomly selected beam pair, they each determine their own value of a channel state information measure in steps 216 and 226. In other words, referring to step 216, the first transceiver uses the received one or more probe signals to determine a first-transceiver version of channel state information associated with the beam pair formed by the randomly selected transmit beam angle and receive beam angle. And, referring to step 226, the second transceiver uses the one or more probe signals it has received to determine a second-transceiver version of channel state information associated with the beam pair.

It is noted that the term channel state information is used herein in a broad sense as information about the communication channel's characteristics. There are several possibilities to obtain channel state information that is suitable in the context of the present invention. A preferred implementation of the channel state information is the Channel State Information (CSI) in a narrow sense, which is determined as defined in current standards such as 3GPP 5G, also known as 3GPP New Radio (NR), i.e., Release 15 or higher, and anticipated for use also in 6G. Here, in particular a well defined CSI reference signal (RS) is configured via radio resource control (RRC) signalling and used as the probe signal. Other measures can be used to provide the channel state information, even if they could be less advantageous for the purpose of key generation for a variety of reasons. Some exemplary alternative measures are explained in the following:

- a measure of the power level received by a transceiver from a transmitted signal, in particular, the known Received Signal Strength Indicator (RSSI). RSSI is a measure of received power at the receiver, which is computed using the signal strength of the received complex baseband signal. Using only the RSSI for key generation has drawbacks such as this does not include multipath effects and low key generation rate;

- a measure indicative of the phase of the received probe signal in relation to the transmitted signal;

- time-of-arrival (ToA) information, i.e. a measure of how long it takes for a probe signal to travel between the two transceivers, or time-difference-of-arrival (TDOA) information, i.e. the difference in arrival time between different paths in a multipath channel; ToA and TDoA information is mainly used for localization of the users because using this information a distance between the users can be calculated. The reciprocity in this case holds only if the propagation environment is stable and the clocks of the systems are highly synchronized. Furthermore, it should be kept in mind that using ToA or TDoA may in some application cases somewhat reduce the security level because it may make it easier for an eavesdropper to extract the distance information, using for instance AoA estimating equipment;

- Doppler shift information, i.e. change in frequency of a signal due to the relative motion between the transceivers; for the Doppler shift to be reciprocal, the channel should be stable within the coherence time and both, transmitter and receiver should be moving relative to each other. If devices are moving at a higherspeed, adaptive channel estimation algorithms may be needed for estimating the Doppler shift and maintaining reciprocity making the exploitation computationally complex; and

- Angle of Arrival (AoA) information; AoA information measured from a common reference shows reciprocity. However, this works in only Line of sight (LoS) condition and is computationally complex.

In another option, a communication system that comprises the first transceiver and the second transceiver, both having beamforming capability, uses the Channel Impulse Response (CIR) for generating the (common) sub-keys. In particular, channel impulse response (CIR) in the time-domain and the corresponding fourier transform called channel frequency response (CFR) in the frequency domain depict small scale multipath effects and include both amplitude and phase responses.

The above-mentioned types of channel state information may also be used in combination, i.e., using two or more different types of channel state information to generate the sub-keys.

Thus, while all of the above properties exhibit reciprocity, it is noteworthy that the Channel State Information (CSI) as defined in the 3GPP standard includes most information that is helpful in the present context, including multipath effects, amplitude and phase information (imaginary part), and is thus the preferred information for key generation.

A particular implementation of the first process stage considering OFDM signal transmission, may be described as follows.

| Algorithm 1 CSI Estimation using Random beams |
|---|
| 1: **for** m = 1:number_of_beams **do** |
| 2:      At Alice: |
| 3:      Select random steering vector |
| 4:      $m_T \leftarrow random\_select(m)$ |
| 5:      $\mathbf{F} \leftarrow \mathbf{F}[m_T]$ |
| 6:      Generate OFDM modulated signal s |
| 7:      $\mathbf{x} = \mathbf{F}s$ |
| 8:      Transmit the signal $\mathbf{x}$ |
| 9: |
| 10:      At Bob: |
| 11:      Select a beam for reception |
| 12:      $m_R \leftarrow random\_select(m)$ |
| 13:      $\mathbf{W} \leftarrow \mathbf{W}(m_R)$ |
| 14:      $Receive\ Y_B = \mathbf{W}^H \mathbf{H}_{AB} \mathbf{F}s$ |
| 15:      Estimate the channel $\mathbf{H}_{AB}$ |
| 16:      Transmit OFDM modulated signal $\mathbf{x}$ |
| 17:      $\mathbf{x} = \mathbf{W}s$ |
| 18: |
| 19:      At Alice: |
| 20:      $Receive\ Y_A = \mathbf{F}^H \mathbf{H}_{BA} \mathbf{W}s$ |
| 21:      Estimate the channel $\mathbf{H}_{BA}$ |
| 22: **end for** |

*Algorithm 1 - CSI Estimation using Random beams*

The following explains this algorithm in more detail. Assuming that there are M transmit and N receive beams, the corresponding beamforming codebooks used by the first and second transceivers are enabling NxM beam pairs. The beamforming codebooks of Alice and Bob are denoted by F and W.

In the proposed random beam selection method, signal transmission and reception take place as follows. At the first transceiver, a random Tx beam index $m_T$ is generated and a corresponding steering vector from the beambook matrix is selected for transmission. Similarly, at the 2nd transceiver a random Rx beam index $m_R$ is generated and the corresponding steering vector is selected for reception.

Using the randomly selected steering vectors, a probe signal, allowing good estimation of the CSI is transmitted from transceiver 1 (A) to transceiver 2 (B). Subsequently, using the same randomly selected beams, a probe signal allowing good estimation of the CSI is transmitted from transceiver 2 (B) to transceiver 1 (A). The received signals $Y_B$ at the second transceiver and $Y_A$ at the first transceiver are vectors composed from individual signals at subcarriers k and determined by the channel impulse response H for the given beam pair. The respective signal components can be described as follows:

$$y_{A,m_T,m_R}[k] = \mathbf{F}_{m_R}^H \mathbf{H}_{BA}[k] \mathbf{W}_{m_T} s[k] + \mathbf{F}_{m_R}^H \mathbf{n}_A,$$

and

$$y_{B,m_T,m_R}[k] = \mathbf{W}_{m_R}^H \mathbf{H}_{AB}[k] \mathbf{F}_{m_T} s[k] + \mathbf{W}_{m_R}^H \mathbf{n}_B.$$

where s[k] is the frequency domain data symbol used for CSI extraction at subcarrier k, $m_{T/R} \in_R \{1, ..., M\}$, $n_A$ and $n_B$ are the received noise vectors at the first and second transceivers, respectively.

Once the random beam selection and CSI estimation are completed, the composite key generation algorithm is applied to generate the secret keys. Thus, a second process stage is performed by the first and second transceiver, encompassing steps 216 to 218 on the side of the first transceiver, and steps 226 to 228 on the side of the second transceiver.

In steps 216 and 226, the first and second transceiver each perform for at least a fraction of the beam pairs, a quantization step. In this step, both real and imaginary parts of the determined channel state information may be used. However, it is also possible to only use one of the components, real part or imaginary part.

In steps 217 and 227, the first and second transceiver each perform a reconciliation step. In this step, information is exchanged between the first and second transceiver regarding the respective other of the first-transceiver and second-transceiver version of channel state information determined for a respective beam pair. This need not be in the form of the full quantized channel state information version, but can be restricted to a suitable information, such as parity bits or syndromes derived from error-correcting codes. Reference is also made to the description of Fig. 3 below. This ensures that the respective sub-key cannot be derived by an eavesdropper, while still allowing for reconciliation of mismatched bits. This way, both transceivers arrive at the same quantized common channel state information version, and thus determine a respective sub-key.

In a subsequent step 218, 228 the first and second transceiver use the determined common channel state information version/ sub-key associated with the different beam pairs to combining the determined sub-keys to obtain a composite key.

It is noted that in a variant the determination of each individual sub-key is performed in a sequence from steps 211, 221 up to the reconciliation steps 217, 227, and followed only then by the next iteration for the next beam pair. In other word, the comparison of the number of beam pairs collected so far with the number to be reached, shown under steps 215, 225 in Fig. 2, is shifted to after process steps 217, 227.

Referring now to Fig. 3, the second processing stage involving the composite key generation process is described in more detail. The real and imaginary parts of the CSI are quantized to generate sequences of binary bits in the quantization stage. An adaptive threshold-based quantization process is employed where bits within the maximum and minimum quantization thresholds are set to 1. The indices of these bits are called dropped indices, which are then exchanged between the first and second transceivers (also referred to as "Alice" and "Bob") to reduce the mismatches. In the next stage, the errors are further reduced by generating and exchanging the parity bit sequences. Further, the SHA1 hash function is applied to generate two keys from real and imaginary parts respectively. Then these keys are combined to form a secret beam key (SBK). A set of SBKs are generated from CSIs of selected beam directions and a composite key is formed by combining these keys.

The steps of the key generation are as described in algorithm 2 below:

---
**Algorithm 2** Physical Layer Composite Key Generation
---
**Require:** $\mathbf{H}_{AB}, \mathbf{H}_{BA}$

1: **for** n = 1:number_of_CSIs **do**
2:    Quantize(real($\mathbf{H}_{AB}(n)$))                         ▷ At Bob
3:    Quantize(imag($\mathbf{H}_{AB}(n)$))
4:    Quantize(real($\mathbf{H}_{BA}(n)$))                         ▷ At Alice
5:    Quantize(imag($\mathbf{H}_{BA}(n)$))
6:    $number\_reconcile = 5$
7:    **while** $number\_reconcile > 0$ **do**
8:       Randomly reorder the quantized sequence
9:       Generate parity bit sequence
10:       Transmit to other user
11:       Compare with the received parity sequence
12:       Correct mismatched bits in key k
13:       $number\_reconcile = number\_reconcile - 1$
14:    **end while**
15:    $SBK[n] = hash(\mathbf{k})$
16: **end for**
17: $Composite\ key = SBK[1]\ SBK[2]\ ...\ SBK[n]$

---

Here, the parameter 'number_reconcile' represents the number of times both users must exchange the parity sequences and correct the bits. The optimal (maximum) value of this repetition is predefined in the algorithm.

In summary, for generation of a physical-layer secret key for use in wireless communication, a first transceiver and a second transceiver, both with beamforming capability, in a sequence of repetitions covering a plurality of beam pairs from a beamforming codebook defining a set of beam pairs, select a transmit beam angle and a receive beam angle in respective random order unknown to the respective other transceiver, for probe signal exchange and determining respective versions of channel state information. The channel state information versions are used to determine, after quantization and reconciliation, sub-keys associated with the respective beam pairs, which are combined to obtain a composite physical-layer secret key.

**Claims**

1. A method for generation of a physical-layer secret key, herein PLSK, for use in wireless communication between a first transceiver and a second transceiver, both with beamforming capability, the method comprising,

   in a sequence of repetitions covering a plurality of beam pairs from a beamforming codebook defining a set of beam pairs:

   - A. the first transceiver selecting a transmit beam angle from the beam codebook, and sending to the second transceiver one or more predetermined probe signals using the selected transmit beam angle, wherein selecting the transmit beam angle is performed in a first random order over the sequence of repetitions, the first random order being unknown to the second transceiver;
   - B. the second transceiver selecting a receive beam angle from the beamforming codebook, and receiving, using the selected receive beam angle, the one or more probe signals sent by the first transceiver, wherein selecting the receive beam angle is performed in a second random order over the sequence of repetitions, the second random order being unknown to the first transceiver;
   - C. the second transceiver using the received one or more probe signals to determine a second-transceiver version of channel state information associated with the beam pair formed by the selected transmit beam angle and the selected receive beam angle;
   - D. the second transceiver, using the selected receive beam angle as a response transmit beam angle, sending to the first transceiver the one or more predetermined probe signals;
   - E. the first transceiver, using the selected transmit beam angle as a response receive beam angle, receiving the one or more probe signals sent by the second transceiver;
   - F. the first transceiver using the received one or more probe signals to determine a first-transceiver version of channel state information associated with the beam pair;

   wherein the method further comprises:

   - G: performing, for at least a fraction of the beam pairs, a quantization and subsequent reconciliation process stage using the respective first-transceiver and second-transceiver version of channel state information determined for a respective beam pair to determine a respective sub-key version associated with the respective beam pair;
   - H: combining the determined sub-keys to obtain a composite key.

2. The method of claim 1, further comprising selecting only those beam pairs for performing the quantization and subsequent reconciliation process stage, for which the determined channel state information meets or exceeds a predetermined channel quality criterion.

3. The method of claim 1 or 2, wherein generating the sub-key comprises using the common channel state information as an input to a hashing function, and using an output of the hashing function as the sub-key.

4. The method of any of the claims 1 to 3, wherein the probe signals are individual for each beam pair.

5. The method of any of the claims 1 to 4, wherein the first and second transceivers use an identical frequency for transmitting the probe signals associated with a respective beam pair.

6. The method of any of the claims 1 to 5, wherein the step of the first and second transceiver each determining its version of channel state information associated with the respective beam pair comprises determining a real-value part and an imaginary-value part of the channel state information.

7. The method of any of the claims 1 to 6, wherein the channel state information comprises one or more of the following:

- a Channel State Information, CSI, determined using as the one or more probe signals a CSI reference signal in accordance with a 3GPP, Release 15 or higher, standard;
- information indicative of a Channel Impulse Response, CIR, determined from the probe signal;
- information indicative of the phase of the received probe signal in relation to the transmitted signal;
- information indicative of how long it takes for the probe signal to travel between the two transceivers, in particular a time-of-arrival, ToA, or a time-difference-of-arrival, TDOA, information
- information indicative of a change in frequency of the probe signal due to the relative motion between the transceivers, Doppler shift information; and
- information indicative of an angle of arrival, AoA, of the probe signal.

8. The method of any of the claims 1 to 7, wherein combining the determined sub-keys to obtain a composite key comprises combining the sub-keys in an order corresponding to the selection order of the associated beam pairs in the sequence of repetitions.

9. The method of any of the claims 1 to 8, further comprising performing the method between a user equipment as the first transceiver and a base station of a wireless communication network as the second transceiver.

10. The method of any of the claims 1 to 9, further comprising the first and second transceiver employing OFDM to modulate and send the probe signals and/or the payload.

11. A method for operating a first transceiver in generating a physical-layer secret key, herein PLSK, for use in wireless communication between the first transceiver and a second transceiver, both with beamforming capability, the method comprising,

the first transceiver, in a sequence of repetitions covering a plurality of beam pairs from a beamforming codebook defining a set of beam pairs:

- selecting a transmit beam angle from the beam codebook, and sending to the second transceiver one or more predetermined probe signals using the selected transmit beam angle, wherein selecting the transmit beam angle is performed in a first random order over the sequence of repetitions, the first random order being unknown to the second transceiver;
- using the selected transmit beam angle as a response receive beam angle, receiving the one or more probe signals sent by the second transceiver; and
- using the received one or more probe signals to determine a first-transceiver version of channel state information associated with the beam pair;

wherein the method further comprises:

- performing, for at least a fraction of the beam pairs, a quantization and subsequent reconciliation process stage for a respective beam pair to determine a common channel state information version associated with the respective beam pair from the respective first-transceiver version and information on a respective second-transceiver version of channel state information determined by the second transceiver;
- using the determined common channel state information version in determining a sub-key associated with the respective beam pair; and
- combining the determined sub-keys to obtain a composite key.

12. A controller for controlling operation of a transceiver in performing a method for generation of a physical-layer secret key, herein PLSK, for use in wireless communication between the transceiver as a first transceiver, and a second transceiver, both with beamforming capability, wherein the controller is configured to control operation of the transceiver to perform the method of claim 11.

13. A transceiver for performing wireless communication, the transceiver having beamforming capability and being configured to perform the method of claim 11.

14. The transceiver of claim 13, comprising the controller of claim 12.

15. A communication system comprising a first transceiver and a second transceiver, both having beamforming capability, wherein the first transceiver and the second transceiver are configured to jointly perform the method of claim 1 for generation of a physical-layer secret key for use in wireless communications between the first transceiver and the second transceiver.

Fig. 1

Fig. 3

First transceiver

Second transceiver

211 — In random order, select beam for transmission

221 — In random order, select beam for reception

212 — Transmit probe signal using selected beam

222 — Probe signal received? — No

Yes

223 — Transmit probe signal using selected beam

213 — Probe signal received? — No

Yes

214 — Determine first-transceiver CSI

224 — Determine second-transceiver CSI

215 — Number of beam pair reached? — No

225 — Number of beam pairs reached? — No

Yes

Yes

216 — Perform quantization

226 — Perform quantization

217 — Perform reconciliation

227 — Perform reconciliation

218 — Determine composite key

228 — Determine composite key

Fig. 2

Europäisches
Patentamt

European
Patent Office

Office européen
des brevets

## EUROPEAN SEARCH REPORT

**Application Number**

EP 24 21 4768

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MANJAPPA NAVANEETHA C ET AL: "Enhanced Physical Layer Secure Key Generation using mm Wave Beamforming", 2022 INTERNATIONAL SYMPOSIUM ON WIRELESS COMMUNICATION SYSTEMS (ISWCS), IEEE, 19 October 2022 (2022-10-19), pages 1-6, XP034225865, DOI: 10.1109/ISWCS56560.2022.9940347 [retrieved on 2022-11-16] * page 1 - page 3 * ----- | 1-15 | INV. H04W12/041 H04L9/08 |
| X | MANJAPPA NAVANEETHA CHANNIGANATHOTA ET AL: "Analysis of IQ Imbalance Effects on Physical Layer Secure Key Generation in mmWave Systems", 2024 INTERNATIONAL SYMPOSIUM ON NETWORKS, COMPUTERS AND COMMUNICATIONS (ISNCC), IEEE, 22 October 2024 (2024-10-22), pages 1-6, XP034757641, DOI: 10.1109/ISNCC62547.2024.10759029 [retrieved on 2024-11-26] * page 1 - page 3 * ----- | 1-15 | |
| A | Masoud Ghoreishi Madiseh ET AL: "Wireless Secret Key Generation Versus Capable Adversaries", , 1 January 2012 (2012-01-01), XP055355041, ISBN: 978-0-494-88437-9 Retrieved from the Internet: URL:https://dspace.library.uvic.ca/bitstre am/handle/1828/3766/Masoud_Ghoreishi_Madis eh_PhD_2011.pdf?sequence=3 [retrieved on 2025-03-13] * Chapter 7 - Random Beamforming * * page 59 - page 61 * ----- | 1-15 | TECHNICAL FIELDS SEARCHED (IPC) H04W H04L |

The present search report has been drawn up for all claims

| Place of search | Date of completion of the search | Examiner |
|---|---|---|
| Munich | 14 March 2025 | Pohl, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)